(19) Europäisches Patentamt

European Patent Office

Office européen des brevets

(11) **EP 0 678 414 B1**

(12) **FASCICULE DE BREVET EUROPEEN**

(45) Date de publication et mention de la délivrance du brevet:
**08.07.1998 Bulletin 1998/28**

(51) Int. Cl.⁶: **B60L 11/02**

(21) Numéro de dépôt: **95105340.4**

(22) Date de dépôt: **08.04.1995**

(54) **Véhicule hybride**

Hybridfahrzeug

Hibrid vehicle

(84) Etats contractants désignés:
**AT BE DE ES GB IT NL SE**

(30) Priorité: **19.04.1994 CH 1180/94**
**05.05.1994 FR 9405532**

(43) Date de publication de la demande:
**25.10.1995 Bulletin 1995/43**

(73) Titulaire:
**SMH Management Services AG**
**CH-2501 Biel (CH)**

(72) Inventeurs:
• **Edye, Thomas**
**CH-2017 Boudry (CH)**
• **Jeanneret, René**
**CH-3274 Merzligen (CH)**

(74) Mandataire:
**de Montmollin, Henri et al**
**ICB**
**Ingénieurs Conseils en Brevets SA**
**Rue des Sors 7**
**2074 Marin (CH)**

(56) Documents cités:
**EP-A- 0 556 942**          WO-A-93/07021
**DE-A- 4 133 059**

## Description

La présente invention a pour objet un véhicule automobile comportant :

- un premier moteur constitué par un moteur à combustion interne pour produire une puissance mécanique;
- des moyens d'asservissement de vitesse comportant des premiers moyens de mesure couplés audit premier moteur pour fournir un premier signal de mesure représentatif de la vitesse de rotation dudit premier moteur et répondant à un signal de consigne de vitesse représentatif d'une vitesse de rotation de consigne pour asservir ladite vitesse de rotation dudit premier moteur à ladite vitesse de rotation de consigne;
- un dispositif de commande comportant un organe de commande actionnable par un conducteur dudit véhicule et un détecteur couplé audit organe de commande pour fournir un premier signal de consigne de puissance représentatif de la position dudit organe de commande et d'une première puissance de consigne;
- un générateur couplé mécaniquement audit premier moteur pour produire une première puissance électrique en réponse à ladite puissance mécanique;
- une roue motrice;
- un deuxième moteur constitué par un moteur électrique couplé mécaniquement à ladite roue motrice; et
- des moyens de réglage répondant à ladite première puissance électrique pour fournir une deuxième puissance électrique audit deuxième moteur et répondant audit premier signal de consigne de puissance pour produire ledit signal de consigne de vitesse et pour asservir ladite deuxième puissance électrique à ladite première puissance de consigne.

Un véhicule ayant les caractéristiques ci-dessus, qui est souvent qualifié de véhicule hybride, est décrit dans la demande de brevet PCT publiée sous le numéro WO 93/07022.

Lorsqu'un tel véhicule est utilisé, son moteur à combustion interne fonctionne en permanence. Le générateur entraîné par ce moteur fournit donc également en permanence toute l'énergie consommée par le moteur électrique couplé à la roue motrice du véhicule et qui sera appelé moteur de traction dans la suite de cette description.

Cette caractéristique donne à ce véhicule l'avantage qu'il ne doit pas comporter de batterie d'accumulateurs de grande capacité telle que celle qui, dans les autres véhicules connus du même genre, fournit au moins partiellement et/ou temporairement l'énergie électrique consommée par le moteur de traction.

Le véhicule décrit dans la demande de brevet WO 93/07022 mentionnée ci-dessus comporte un circuit de commande qui asservit la puissance électrique fournie au moteur de traction à une puissance de consigne variable déterminée par la position d'une pédale d'accélérateur.

Lorsque le conducteur du véhicule modifie la position de la pédale d'accélérateur pour augmenter la puissance fournie au moteur de traction, dans le but par exemple d'augmenter la vitesse de ce véhicule, le circuit de réglage détermine une nouvelle puissance de consigne correspondant à la nouvelle position de la pédale d'accélérateur et une nouvelle vitesse de rotation de consigne qui est celle à laquelle le moteur à combustion interne du véhicule doit tourner pour fournir une puissance mécanique égale, aux pertes près, à la puissance de consigne mentionnée ci-dessus tout en ne consommant que la quantité la plus faible possible de carburant.

Dans un premier temps, le circuit de réglage ne modifie cependant pas la puissance électrique fournie par le générateur au moteur de traction, mais n'agit que sur le moteur à combustion interne de manière que la puissance mécanique fournie par ce dernier augmente. Cette puissance mécanique étant maintenant supérieure à la puissance électrique fournie par le générateur, la vitesse de rotation du moteur à combustion interne augmente.

Au moment où cette vitesse de rotation du moteur à combustion interne atteint sa nouvelle valeur de consigne, et seulement à ce moment, le circuit de réglage augmente la puissance électrique fournie au moteur de traction jusqu'à sa nouvelle valeur de consigne. Cette puissance électrique étant maintenant égale, toujours aux pertes près, à la puissance mécanique fournie par le moteur à combustion interne, la vitesse de rotation de ce dernier se stabilise à la nouvelle vitesse de consigne.

On voit que, dans un tel cas, la puissance électrique fournie au moteur de traction n'augmente pas immédiatement lorsque le conducteur du véhicule donne à la pédale d'accélérateur sa nouvelle position, mais seulement après un certain temps qui peut atteindre plusieurs secondes, ce qui est très désagréable pour le conducteur du véhicule, voire même dangereux.

Un véhicule connu tel que celui qui a été décrit ci-dessus a encore l'inconvénient que, lorsque son conducteur déplace rapidement sa pédale d'accélérateur d'une quantité importante alors qu'il est arrêté ou roule à faible vitesse, le circuit de réglage fournit au moteur de traction toute-la puissance électrique correspondant à la nouvelle position de la pédale d'accélérateur dès que le moteur à combustion interne a atteint sa nouvelle vitesse de consigne, comme cela a été décrit ci-dessus.

A ce moment, le moteur de traction est encore arrêté, ou ne tourne que lentement. Le courant qu'il absorbe peut donc être très élevé et avoir une intensité plusieurs fois plus grande que celle du courant absorbé par ce moteur de traction lorsqu'il tourne à sa vitesse maximale en fournissant sa puissance mécanique maximale.

Les divers composants électroniques du circuit de réglage qui sont traversés par le courant absorbé par le moteur de traction doivent donc être dimensionnés de manière à supporter sans dommage ce courant très élevé, même si les circonstances dans lesquelles ce courant très élevé passe dans ces composants ne se produisent que relativement rarement. Ces composants sont donc chers, et leur prix influence défavorablement celui du circuit de réglage.

Un but de la présente invention est de proposer un véhicule du même genre que celui qui a été décrit ci-dessus mais qui ne présente pas les inconvénients de celui-ci, c'est-à-dire un véhicule dans lequel la puissance électrique fournie au moteur de traction augmente immédiatement lorsque son conducteur appuie sur sa pédale d'accélérateur et dans lequel le courant absorbé par le moteur de traction ne dépasse jamais la valeur qu'il a lorsque ce moteur de traction tourne à sa vitesse maximale en fournissant sa puissance maximale.

Ce but est atteint par le véhicule revendiqué, qui comporte un premier moteur constitué par un moteur à combustion interne pour produire une puissance mécanique;

- des moyens d'asservissement de vitesse comportant des premiers moyens de mesure couplés audit premier moteur pour fournir un premier signal de mesure représentatif de la vitesse de rotation dudit premier moteur et répondant à un signal de consigne de vitesse représentatif d'une vitesse de rotation de consigne pour asservir ladite vitesse de rotation dudit premier moteur à ladite vitesse de rotation de consigne;
- un dispositif de commande comportant un organe de commande actionnable par un conducteur dudit véhicule et un détecteur couplé audit organe de commande pour fournir un premier signal de consigne de puissance représentatif de la position dudit organe de commande et d'une première puissance de consigne;
- un générateur couplé mécaniquement audit premier moteur pour produire une première puissance électrique en réponse à ladite puissance mécanique;
- une roue motrice;
- un deuxième moteur constitué par un moteur électrique couplé mécaniquement a ladite roue motrice; et
- des moyens de réglage répondant à ladite première puissance électrique pour fournir une deuxième puissance électrique audit deuxième moteur et répondant audit premier signal de consigne de puissance pour produire ledit signal de consigne de vitesse et pour asservir ladite deuxième puissance électrique à ladite première puissance de consigne; et qui caractérisé par le fait que ledit véhicule comporte en outre des deuxièmes moyens de mesure couplés audit deuxième moteur pour fournir un deuxième signal de mesure représentatif de la vitesse de rotation dudit deuxième moteur;
et par le fait que lesdits moyens de réglage comportent :

- des moyens d'asservissement de puissance répondant à un deuxième signal de consigne de puissance représentatif d'une deuxième puissance de consigne pour asservir ladite deuxième puissance électrique à ladite deuxième puissance de consigne;
- des moyens de sécurité répondant audit premier signal de consigne de puissance et audit deuxième signal de mesure pour fournir un troisième signal de consigne de puissance représentatif d'une troisième puissance de consigne et agencés de manière que ledit troisième signal de consigne de puissance a une valeur telle que ladite troisième puissance de consigne est au plus égale à la puissance électrique maximale que lesdits moyens d'asservissement peuvent fournir sans dommage audit deuxième moteur;
- des premiers moyens de traitement de signal répondant audit troisième signal de consigne de puissance pour fournir ledit signal de consigne de vitesse et agencés de manière que ledit signal de consigne de vitesse a une valeur telle que, lorsque la vitesse de rotation dudit premier moteur est égale à ladite vitesse de consigne, une fraction déterminée de la puissance mécanique maximale que ledit premier moteur peut fournir est égale à la somme de ladite troisième puissance de consigne et des puissances dissipées dans ledit générateur et dans lesdits moyens d'asservissement de puissance;
- des deuxièmes moyens de traitement de signal répondant audit premier signal de mesure pour fournir un quatrième signal de consigne de puissance représentatif d'une quatrième puissance de consigne et agencés de manière que ledit quatrième signal de consigne de puissance a une valeur telle que ladite quatrième puissance de consigne est égale à la différence entre ladite fraction déterminée de ladite puissance mécanique maximale et lesdites puissances dissipées; et
- des moyens de sélection répondant audit troisième signal de consigne de puissance et audit quatrième signal de consigne de puissance pour fournir ledit deuxième signal de consigne de puissance et agencés de manière que ledit deuxième signal de consigne de puissance a une valeur telle que ladite deuxième puissance de consigne est égale à la plus petite desdites troisième puissance de consigne et quatrième puissance de consigne.

Grâce à ces caractéristiques, et comme cela sera montré en détail plus loin, un véhicule selon la présente invention réagit exactement comme un véhicule classique lorsque son conducteur appuie sur la pédale d'accélérateur, la puissance électrique fournie au moteur de traction augmentant en même temps que la puissance mécanique fournie par le moteur à combustion interne, sans qu'il soit nécessaire d'attendre que ce moteur à combustion interne ait atteint sa nouvelle vitesse de rotation comme dans le véhicule connu décrit dans la demande de brevet WO 93/07022.

Il en résulte que la conduite d'un véhicule selon la présente invention est beaucoup plus agréable et plus sûre que celle du véhicule connu mentionné ci-dessus.

En outre, et toujours grâce à ces caractéristiques, les composants électroniques traversés par le courant absorbé par le moteur de traction n'ont pas besoin d'être dimensionnés de manière à pouvoir supporter sans dommage un courant supérieur à celui que ce moteur absorbe lorsqu'il fournit sa puissance maximale en tournant à sa vitesse de rotation maximale.

Il en résulte que ces composant électroniques peuvent être moins chers, toutes autres choses étant égales, que les composants électroniques correspondants du véhicule connu mentionné ci-dessus et que le prix de revient du véhicule selon la présente invention peut donc être plus bas, toutes autres choses étant aussi égales, que celui de ce véhicule connu.

D'autres buts et avantages de la présente invention seront rendus évidents par la description qui va être faite ci-après à l'aide du dessin annexé dans lequel :

- la figure 1 est un schéma-bloc d'une forme d'exécution du véhicule selon la présente invention;
- la figure 2 est un diagramme représentant schématiquement la variation de la puissance mécanique P fournie par un moteur à explosion en fonction de sa vitesse de rotation V pour deux valeurs différentes du signal de commande SP de son carburateur; et
- les figures 3 à 6 sont des diagrammes qui illustrent schématiquement les caractéristiques de divers composants du circuit de la figure 1.

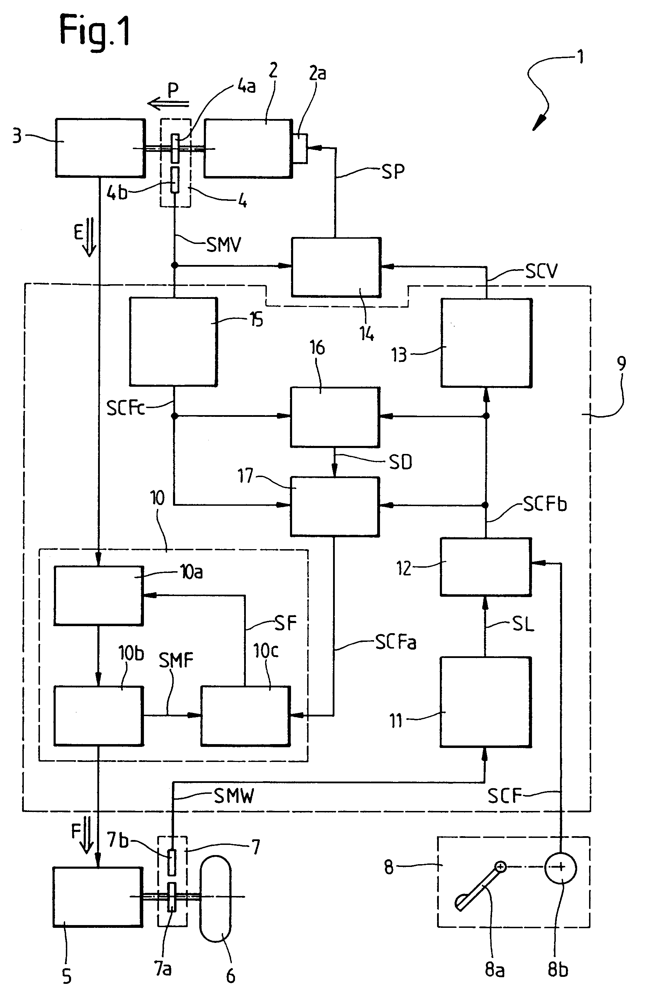

Avant de commencer la description de l'invention, on notera que les liaisons électriques entre les divers composants du schéma de la figure 1 qui vont être décrits ci-après ont été symbolisées par des traits simples munis de flèches qui indiquent schématiquement le sens dans lequel les informations ou l'énergie électrique sont transmises d'un composant à une autre. L'homme du métier reconnaîtra cependant facilement que certaines de ces liaisons sont constituées, en pratique, par plusieurs conducteurs qui n'ont pas été représentés séparément pour ne pas compliquer inutilement la figure 1.

En outre, l'homme du métier verra aisément que la plupart des circuits qui traitent et/ou produisent ces informations, et qui seront décrits plus loin, sont avantageusement des circuits de type numérique, les signaux qui transmettent ces informations de l'un à l'autre de ces circuits étant alors évidemment aussi de type numérique.

De même, l'homme du métier reconnaîtra que tous ces circuits de type numérique peuvent avantageusement être remplacés par un ordinateur programmé de manière à remplir les mêmes fonctions que ces circuits.

On notera encore que les flèches doubles visibles dans la figure 1 symbolisent les diverses puissances mécaniques ou électriques qui sont mises en jeu dans le véhicule de cette figure 1.

Dans sa forme d'exécution représentée schématiquement et partiellement à la figure 1 à titre d'exemple non limitatif, le véhicule selon la présente invention est désigné par la référence générale 1.

Le véhicule 1 comporte un moteur à combustion interne 2 dont l'organe d'alimentation en carburant et en comburant est désigné par la référence 2a.

On admettra pour simplifier la présente description que le moteur 2 est, dans le présent exemple, un moteur à explosion classique et que son organe d'alimentation 2a est constitué par un carburateur également classique.

L'homme du métier verra cependant facilement que le moteur 2 peut être de l'un quelconque des divers types de moteurs à combustion interne bien connus tels que, par exemple, les moteurs Diesel ou les turbines à gaz. De même, l'organe 2a peut être de l'un quelconque des divers types d'organes d'alimentation adaptés respectivement à ces divers types de moteurs à combustion interne. Notamment, lorsque le moteur 2 est un moteur à explosion comme dans le présent exemple, son organe d'alimentation 2a peut bien entendu être constitué par un système à injection également bien connu.

Cependant, pour une raison qui sera rendue évidente par la suite de cette description, il est nécessaire que le débit de carburant et/ou de comburant fourni au moteur 2 par son organe d'alimentation 2a soit réglable en réponse à un signal de commande adéquat qui sera désigné par la référence SP.

On admettra dans le présent exemple que le carburateur 2a du moteur à explosion 2 est agencé de manière que son papillon, non représenté séparément, passe de sa position complètement fermée à sa position complètement ouverte lorsque ce signal de commande SP varie d'une valeur minimale SPmin à une valeur maximale SPmax.

Le signal SP constitue donc un signal de commande de la puissance mécanique P fournie par le moteur 2, cette puissance P étant évidemment égale à sa valeur maximale Pmax lorsque le signal SP a sa valeur maximale SPmax.

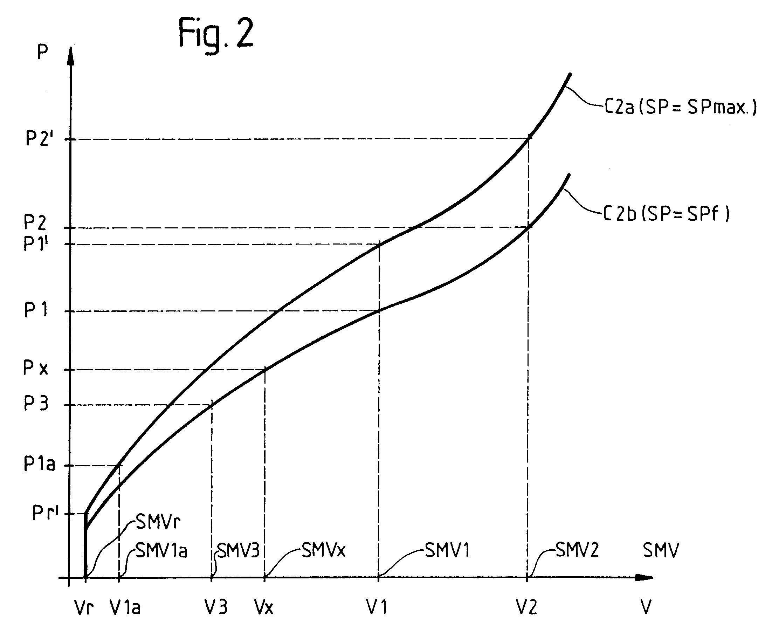

La courbe C2a de la figure 2 représente schématiquement la variation bien connue de cette puissance maximale Pmax en fonction de la vitesse de rotation V du moteur 2.

Dans la suite de cette description, et pour une raison qui sera rendue évidente plus loin, on désignera par SPf la valeur du signal SP pour laquelle le moteur 2 fournit une puissance mécanique Pf égale à une fraction f déterminée de sa puissance maximale Pmax, quelle que soit sa vitesse de rotation V.

Pour une raison qui sera rendue évidente plus loin, cette fraction f doit être inférieure à 100%. Mais l'homme du métier comprendra que cette fraction f ne doit pas être trop petite, car alors le moteur 2 fonctionnerait la plupart du temps avec un rendement nettement inférieur à son rendement maximal. En pratique on choisira de préférence pour cette fraction f une valeur comprise entre 90% et 70%, par exemple une valeur de 80% environ.

La courbe C2b également tracée dans la figure 2 représente schématiquement la variation de cette puissance mécanique Pf en fonction de la vitesse de rotation V du moteur 2 dans le cas où la fraction f mentionnée ci-dessus est égale à 80%.

On notera que, de manière bien connue, la puissance mécanique P fournie par le moteur 2 est nulle, ou au moins pratiquement nulle, lorsque le signal SP a sa valeur minimale SPmin, la courbe représentant cette puissance mécanique P se confondant alors pratiquement avec l'axe des abscisses de la figure 2.

On notera également que, toujours de manière bien connue, la puissance mécanique P fournie par le moteur 2 est aussi nulle, ou pratiquement nulle, lorsque la vitesse de rotation V de ce moteur 2 est égale ou inférieure à sa vitesse dite généralement vitesse de ralenti et désignée par la référence Vr à la figure 2.

L'arbre de sortie du moteur 2 est relié au rotor, non représenté séparément, d'un générateur rotatif d'énergie électrique 3 par une liaison mécanique symbolisée dans la figure 1 par un double trait.

La puissance électrique fournie par le générateur 3 en réponse à la puissance mécanique P qu'il reçoit du moteur 2 sera désignée par la référence E. La différence entre cette puissance mécanique P et cette puissance électrique F, qui représente la puissance dissipée dans le générateur 3, sera désignée par la référence DG.

Dans la figure 1, le moteur 2 et le générateur 3 sont séparés l'un de l'autre, mais il est évident qu'ils peuvent également être accolés l'un à l'autre. De même, la liaison mécanique entre l'arbre de sortie du moteur 2 et le rotor du générateur 3 peut être directe, comme cela a été représenté, ou être réalisée par l'intermédiaire d'un train d'engrenages ou de tout autre dispositif similaire.

Le véhicule 1 comporte un dispositif de mesure 4 fournissant un signal de mesure SMV proportionnel à la vitesse de rotation V du moteur à explosion 2, qui est évidemment aussi, dans le présente exemple, la vitesse de rotation du générateur 3. La figure 2 représente donc également la variation des puissances mécaniques Pmax et Pf en fonction de la valeur du signal SMV.

Le dispositif de mesure 4 comporte un disque 4a fixé concentriquement à l'arbre reliant le moteur 2 au générateur 3 et un circuit électronique 4b associé à un capteur photo-électrique ou magnétique, non représenté séparément et produisant le signal SMV en réponse au passage devant ce capteur de dents ou de trous disposés régulièrement à la périphérie du disque 4a et qui n'ont pas non plus été représentés séparément.

Le dispositif de mesure 4 ne sera pas décrit plus en détail car il s'agit d'un dispositif bien connu qui peut d'ailleurs être réalisé de diverses autres manières également bien connues.

Le véhicule 1 comporte en outre un moteur électrique 5 dont le rotor, non représenté séparément, est relié à une roue motrice 6 par une liaison mécanique également symbolisée par un trait double.

Le moteur 5 et la roue 6 sont aussi séparés dans la figure 1, mais il est évident qu'ils peuvent également être accolés l'un à l'autre. De même, la liaison mécanique entre le rotor du moteur 5 et la roue 6 peut être directe, comme cela a été représenté, ou être réalisée par l'intermédiaire d'un train d'engrenages ou de tout autre dispositif similaire.

Le moteur 5, qui est le moteur de traction du véhicule 1, ne sera pas décrit en détail car il peut être de l'un quelconque des divers types de moteurs électriques qui sont adaptés à cet usage et qui sont bien connus.

On admettra que, dans le présent exemple, le moteur 5 est un moteur asynchrone.

Le véhicule 1 comporte encore un autre dispositif de mesure, désigné par la référence 7, fournissant un signal de mesure SMW proportionnel à la vitesse de rotation W du moteur 5 qui est évidemment aussi, dans le présent exemple, la vitesse de rotation de la roue 6.

Le dispositif de mesure 7 comporte un disque 7a semblable au disque 4a mentionné ci-dessus et fixé concentriquement à l'arbre reliant le moteur 5 à la roue 6, ainsi qu'un circuit électronique 7b semblable au circuit 4b également mentionné ci-dessus et fournissant le signal SMW. Le dispositif de mesure 7 ne sera pas non plus décrit en détail pour les mêmes raisons que celles qui ont été évoquées ci-dessus à propos du dispositif de mesure 4.

Le véhicule 1 comporte encore un dispositif de commande 8 sur lequel le conducteur de ce véhicule 1 peut agir pour règler la vitesse de ce dernier.

Dans le présent exemple, le dispositif de commande 8 comporte une pédale d'accélérateur 8a couplée mécaniquement à un capteur 8b fournissant un signal SCF représentatif de la position de cette pédale 8a. Dans d'autres formes d'exécution du véhicule 1, la pédale d'accélérateur 8a peut être remplacée par n'importe quel autre organe de commande adéquat, par exemple par un levier actionnable manuellement par le conducteur du véhicule. Une telle forme d'exécution n'a pas été représentée.

Le capteur 8b ne sera pas décrit en détail car il s'agit d'un dispositif qui peut être réalisé de diverses manières bien connues des spécialistes.

Comme dans tous les véhicules dont le moteur de traction est un moteur électrique, chaque position de la pédale d'accélérateur 8a correspond à une puissance de consigne, qui sera appelée FC dans la suite de cette description, et dont la valeur, qui est proportionnelle à la valeur du signal SCF, est celle que la puissance électrique fournie au moteur 5 par son circuit de commande, qui sera décrit plus loin, devrait avoir pour que la vitesse du véhicule 1 se maintienne à la vitesse désirée par le conducteur de ce véhicule 1 ou atteigne cette dernière vitesse.

La puissance électrique fournie au moteur 5 par son circuit de commande sera désignée par la référence F dans la suite de cette description.

Le signal SCF et la puissance de consigne FC ont évidemment une valeur nulle lorsque le conducteur du véhicule 1 ne touche pas la pédale d'accélérateur 8a, et une valeur maximale SCFmax et, respectivement, FCmax lorsque ce conducteur appuie cette pédale 8a contre sa butée de fin de course.

Le rapport de proportionnalité entre le signal SCF et la puissance de consigne FC sera désigné par R dans la suite de cette description.

Le véhicule 1 comporte encore un circuit de réglage 9 qui est notamment destiné à asservir la puissance électrique F fournie au moteur 5 à la puissance de consigne FC déterminée par la position de la pédale d'accélérateur 8a.

Le circuit de réglage 9 est également destiné à régler la vitesse de rotation V du moteur à explosion 2 à la valeur pour laquelle ce dernier fournit, lorsque le signal de commande SP de son carburateur 2a a la valeur SPf définie ci-dessus, une puissance mécanique P égale à la somme de la puissance électrique F fournie au moteur 5, des pertes DG dans le générateur 3 et des pertes dans le circuit de commande de ce moteur 5. Ces dernières pertes seront désignées par DC dans la suite de cette description.

Pour exécuter ces fonctions, d'une manière qui sera décrite en détail plus loin, le circuit de réglage 9 comporte notamment un circuit d'asservissement 10 disposé entre le générateur 3 et le moteur 5.

Le circuit d'asservissement 10 comporte, de manière classique, un circuit de commande 10a du moteur 5, un circuit de mesure 10b de la puissance électrique F fournie par ce circuit de commande 10a au moteur 5, et un circuit intégrateur 10c.

Le circuit de commande 10a reçoit du générateur 3 la puissance électrique E fournie par ce dernier, et il est agencé de manière à fournir au moteur 5 une tension et/ou un courant ayant une forme adaptée à la nature de ce moteur 5, et à régler la puissance électrique F fournie à ce dernier en fonction d'un signal de commande SF dont l'élaboration sera décrite plus loin.

Dans le présent exemple où le moteur 5 est un moteur asynchrone, le circuit de commande 10a peut être par exemple agencé de manière à appliquer à ce moteur 5 une tension alternative formée d'impulsions ayant une amplitude fixe mais une fréquence et un rapport cyclique variables en fonction du signal SF. Cette technique de production de cette tension est souvent désignée par les initiales PWM de son appellation en anglais (Pulse Width Modulation).

Le circuit de mesure 10b est agencé de manière à fournir un signal de mesure SMF proportionnel à la puissance électrique F fournie par le circuit de commande 10a au moteur 5.

Le circuit intégrateur 10c est agencé de manière à produire le signal SF avec une valeur égale à l'intégrale en fonction du temps de la différence entre un signal de consigne SCFa et le signal de mesure SMF mentionné ci-dessus. L'élaboration du signal de consigne SCFa sera décrite plus loin. On mentionnera simplement ici que ce signal SCFa est proportionnel à une puissance de consigne FCa dont on verra également plus loin qu'elle peut prendre diverses valeurs, le rapport de proportionnalité entre le signal SCFa et la puissance de consigne FCa ayant aussi la valeur R mentionnée ci-dessus.

Les trois circuits 10a, 10b et 10c ne seront pas décrits plus en détail car ils peuvent être réalisés de diverses manières bien connues des spécialistes.

On mentionnera simplement qu'ils sont bien entendu adaptés les uns aux autres et qu'ils sont agencés de manière que, lorsque le signal de mesure SMF est égal au signal de consigne SCFa, le signal de commande SF a une valeur telle que la puissance électrique F fournie au moteur 5 est égale à la puissance de consigne FCa. Si le signal SCFa augmente, par exemple, la différence entre ce signal SCFa et le signal SMF devient positive, et le signal SF, qui est égal à l'intégrale en fonction du temps de cette différence, augmente, de sorte que la puissance électrique F augmente aussi, de même que le signal SMF. Lorsque ce dernier devient égal au signal SCFa, la différence entre ces deux signaux s'annule et le signal SF cesse d'augmenter. Un processus similaire se déroule évidemment lorsque la différence entre les signaux SCFa et SMF devient négative.

On admettra en outre que la puissance dissipée dans le circuit de mesure 10b de la puissance électrique F est nulle ou au moins négligeable par rapport à cette dernière.

Pour une raison qui sera expliquée plus loin, les composants du circuit de commande 10a qui sont parcourus par le courant fourni au moteur 5 sont dimensionnés de manière que leur courant nominal, c'est-à-dire le courant maximal qu'ils peuvent supporter en permanence sans dommage, soit égal au courant absorbé par ce moteur 5 lorsqu'il tourne à sa vitesse maximale en fournissant sa puissance mécanique maximale.

Ce courant absorbé par le moteur 5 dans ces conditions est évidemment nettement plus faible que celui que ce moteur 5 peut absorber lorsqu'il tourne à faible vitesse ou qu'il est arrêté.

Il découle de ce dimensionnement de ces composants du circuit de commande 10a que la puissance électrique maximale FM que ce circuit de commande 10a peut fournir au moteur 5 sans dommage est plus faible lorsque ce dernier est arrêté ou tourne lentement que lorsqu'il tourne à sa vitesse maximale.

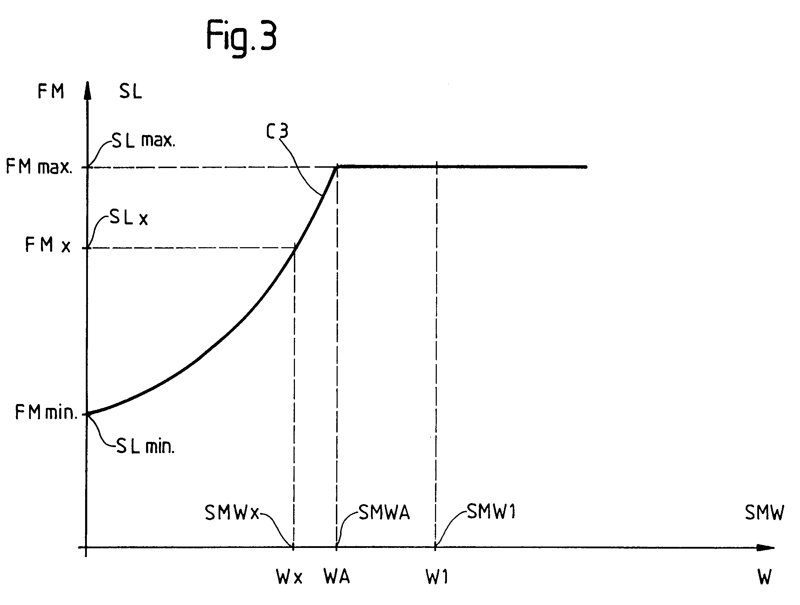

La courbe C3 de la figure 3 représente schématiquement la variation de cette puissance électrique maximale FM en fonction de la vitesse de rotation W du moteur 5, qui est une caractéristique de l'ensemble formé par le circuit de commande 10a et par ce moteur 5.

Cette figure 3 montre que la puissance électrique maximale FM que le circuit de commande 10a peut fournir sans dommage au moteur 5 varie d'une valeur minimale FMmin à une valeur maximale FMmax lorsque la vitesse de rotation W du moteur 5 varie de zéro à une valeur WA et reste égale à cette valeur maximale FMmax lorsque cette vitesse de rotation W augmente au-delà de cette valeur WA.

On rappellera ici que lorsque la pédale d'accélérateur 8a du véhicule 1 est appuyée contre sa butée de fin de course, le signal de consigne SCF produit par le capteur 8b a sa valeur maximale SCFmax qui est proportionnelle à la valeur maximale FCmax de la puissance de-consigne FC. En outre, la valeur de cette puissance de consigne FC est celle que la puissance électrique F fournie par le circuit de commande 10a doit avoir pour que le véhicule 1 se déplace à la vitesse désirée ou atteigne cette dernière. Il est donc évident que le circuit de commande 10a doit être dimensionné de manière que la valeur FMmax de la puissance maximale FM qu'il peut fournir sans dommage au moteur 5 soit au moins égale à la valeur FCmax de la puissance de consigne FC. On admettra dans la suite de cette description que le circuit de commande 10a est dimensionné de manière que ces valeurs FMmax et FCmax soient égales.

Le circuit de réglage 9 comporte encore un premier circuit de traitement de signal, désigné par la référence 11, dont l'entrée est reliée au circuit électronique 7b du dispositif 7 de mesure de la vitesse de rotation W du moteur de traction 5 et reçoit donc le signal de mesure SMW proportionnel à cette vitesse de rotation W.

Pour une raison qui sera expliquée plus loin, le circuit de traitement de signal 11 est agencé de manière à produire un signal de limitation SL proportionnel à la puissance électrique maximale FM définie ci-dessus.

Le signal SL passe donc également d'une valeur SLmin, correspondant à FMmin, à une valeur SLmax, correspondant à FMmax, lorsque la valeur du signal SMW passe de zéro à la valeur SMWA correspondant à la vitesse de rotation WA, et reste à cette valeur SLmax lorsque le signal SMW augmente au-delà de SMWA.

La courbe C3 de la figure 3 représente donc également la variation du signal SL en fonction du signal SMW lorsque les échelles des deux axes du diagramme de cette figure 3 sont choisies en conséquence.

L'homme du métier reconnaîtra aisément que le circuit de traitement 11 peut être avantageusement constitué par une mémoire morte, qui est un composant bien connu et ne sera donc pas décrit en détail.

Pour une raison qui sera rendue évidente plus loin, le circuit de traitement 11 est agencé de manière que le rapport de proportionnalité entre le du signal SL et la puissance FM ait aussi la valeur R mentionnée ci-dessus.

Le circuit de réglage 9 comporte encore un circuit multiplicateur 12 ayant deux entrées qui reçoivent respectivement le signal SCF et le signal SL.

A nouveau pour une raison qui sera expliquée plus loin, le circuit multiplicateur 12 est agencé de manière que la valeur du signal SCFb qu'il fournit à sa sortie soit toujours égale au produit de la valeur du signal SCF et du rapport entre la valeur du signal SL et sa valeur maximale SLmax.

En d'autres termes, le circuit de multiplicateur 12 est agencé de manière que la valeur du signal SCFb vérifie l'équation

$$SCFb = SCF \frac{SL}{SLmax}$$

Cette équation montre que lorsque le moteur 5 tourne à une vitesse W égale ou supérieure à la vitesse WA et que le signal SL a donc sa valeur SLmax, le signal SCFb est égal au signal SCF. Par contre, lorsque la vitesse de rotation W du moteur 5 est inférieur à la vitesse WA et que le signal SL a donc une valeur inférieure à sa valeur SLmax, le signal SCFb est inférieur au signal SCF.

On verra plus loin que le signal SCFb est un signal de consigne de puissance proportionnel à une puissance de consigne FCb, le rapport de proportionnalité entre ce signal SCFb et cette puissance de consigne FCb ayant aussi la valeur R définie ci-dessus.

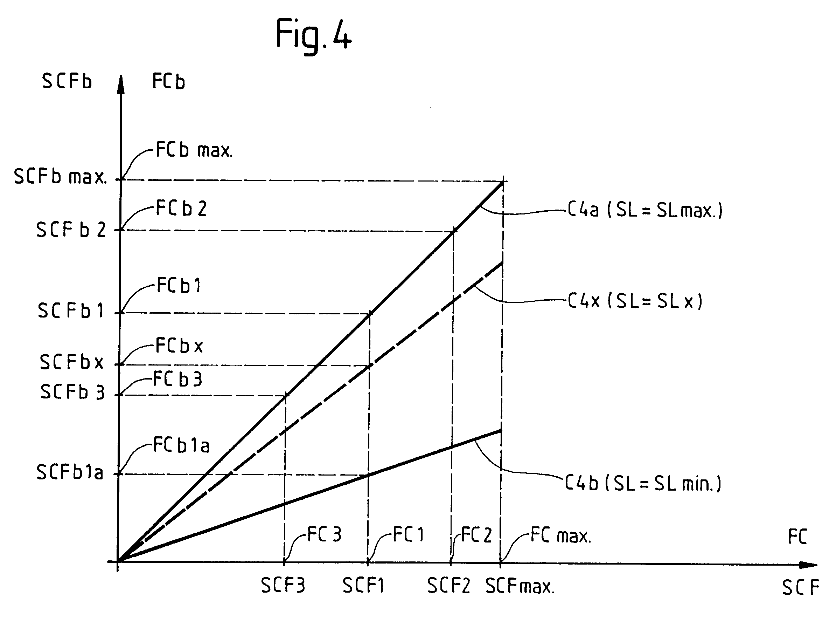

Les droites désignées par C4a et C4b dans la figure 4 représentent respectivement, à titre d'exemple, la variation du signal SCFb en fonction du signal SCF et donc la variation de la puissance de consigne FCb en fonction de la puissance de consigne FC pour les deux valeurs SLmax et SLmin du signal SL.

Le circuit multiplicateur 12 ne sera pas décrit plus en détail car il peut être réalisé de diverses manières bien connues de l'homme du métier.

Le circuit de réglage 9 comporte un deuxième circuit de traitement de signal, désigné par la référence 13, qui répond au signal de consigne de puissance SCFb pour produire un signal SCV dont on verra qu'il est un signal de consigne de vitesse proportionnel à une vitesse de rotation de consigne VC du moteur à explosion 2.

Pour une raison qui sera aussi rendue évidente plus loin, le circuit de traitement 13 est agencé de manière que, pour chaque valeur du signal SCFb, et donc pour chaque valeur de la puissance de consigne FCb, le signal SCV a une valeur égale à celle que le signal SMV a lorsque le signal SP de commande du carburateur 2a du moteur 2 a sa valeur SPf définie ci-dessus et que le moteur 2 tourne à la vitesse V pour laquelle la puissance mécanique P qu'il produit est égale à la somme de la puissance de consigne FCb et des puissances DG et DC dissipées dans le générateur 3 et dans le circuit de commande 10a.

En d'autres termes, la vitesse de consigne VC proportionnelle au signal de consigne SCV est celle à laquelle le moteur 2 doit tourner, lorsque le papillon de son carburateur 2a est dans la position correspondant à la valeur SPf du signal SP, pour fournir une puissance mécanique P égale à la somme de la puissance de consigne FCb proportionnelle au signal SCFb et des puissances dissipées DG et DC définies ci-dessus.

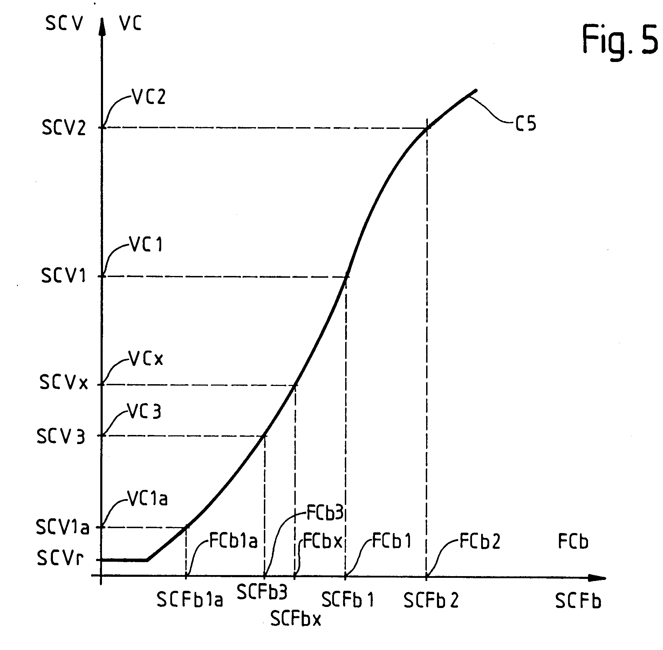

La courbe C5 de la figure 5 représente la caractéristique du circuit de traitement 13, c'est-à-dire la variation du signal SCV en fonction du signal SCFb et donc, si les échelles des deux axes de cette figure 5 sont choisies convenablement, la variation de la vitesse de consigne VC en fonction de la puissance de consigne FCb.

L'homme du métier reconnaîtra aisément que le circuit de traitement 13 peut également être avantageusement constitué par une mémoire morte.

Le signal SCV produit par le circuit de traitement 13 est appliqué à une première entrée d'un circuit comparateur 14 qui comporte une deuxième entrée à laquelle est appliqué le signal SMV proportionnel à la vitesse de rotation V du moteur 2.

Le comparateur 14 a une sortie qui produit le signal SP de commande du carburateur 2a du moteur 2, et il est agencé de manière que ce signal SP prenne sélectivement ses valeurs SPmax, SPF et SPmin selon que le signal SCV est respectivement supérieur, égal ou inférieur au signal SMV.

Comme cela sera montré en détail plus loin, le comparateur 14 et le carburateur 2a constituent ensemble un circuit d'asservissement de la vitesse de rotation V du moteur 2 à la vitesse de consigne VC proportionnelle au le signal SCV. En outre, ce comparateur 14, ce carburateur 2a et le circuit de traitement 13 constituent, ensemble, un circuit d'asservissement de la puissance mécanique P fournie par le moteur 2 à la somme de la puissance de consigne FCb proportionnelle au signal SCFb et des puissances dissipées DG et DC définies ci-dessus.

Le signal SMV proportionnel à la vitesse de rotation V du moteur 2 est également appliqué à l'entrée d'un troisième circuit de traitement de signal qui est désigné par la référence 15.

Pour une raison qui sera rendue évidente plus loin, le circuit de traitement de signal 15 est agencé de manière que, pour chaque valeur du signal SMV, le signal SCFc qu'il produit à sa sortie est proportionnel à une puissance de consigne FCc égale à la différence entre, d'une part, la puissance mécanique P fournie par le moteur 2 lorsqu'il tourne à la vitesse V correspondant à cette valeur du signal SMV et que le signal SP a sa valeur SPf et, d'autre part, la somme des puissances dissipées DG et DC. Le circuit de traitement 15 est de plus agencé de manière que le rapport de proportionnalité entre le signal SCFc et la puissance de consigne FCc ait aussi la valeur R définie ci-dessus.

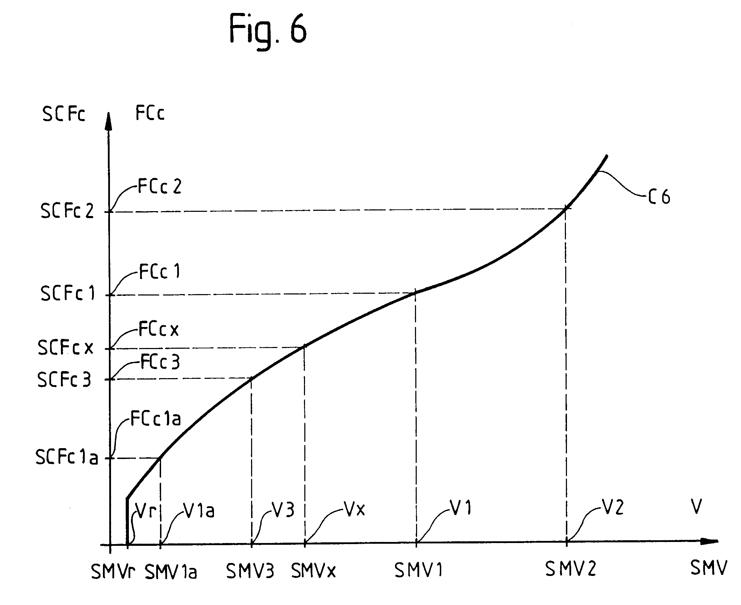

La courbe C6 de la figure 6 représente schématiquement la caractéristique du circuit de traitement 15, c'est-à-dire la variation du signal SCFc en fonction du signal SMV, et donc la variation de la puissance de consigne FCc en fonction de la vitesse de rotation V du moteur 2. On voit que cette courbe C6 a la même allure que la courbe C2b de la figure 2 et, notamment, que le signal SCFc et donc la puissance de consigne FCc sont nuls lorsque le signal SMV a la valeur SMVr correspondant à la vitesse de ralenti Vr du moteur 2.

L'homme du métier verra aisément que le circuit de traitement de signal 15 peut aussi être constitué de manière avantageuse par une mémoire morte.

Le signal SCFc est appliqué à une première entrée d'un circuit comparateur, désigné par la référence 16, qui comporte une deuxième entrée recevant le signal SCFb fourni par le circuit multiplicateur 12. Le comparateur 16 est agencé de manière à produire à sa sortie un signal de commutation SD qui prend sélectivement un premier état SD1 ou un deuxième état SD2 selon que le signal SCFb est inférieur ou supérieur au signal SCFc.

Comme cela sera rendu évident plus loin, le comparateur 16 peut être indifféremment agencé de manière que le signal SD soit dans son premier état SD1 ou son deuxième état SD2 lorsque les signaux SCFb et SCFc sont égaux.

Ce circuit comparateur 16 ne sera pas décrit en détail car l'homme du métier pourra le réaliser sans difficulté de l'une ou l'autre des diverses manières bien connues.

Le circuit de réglage 9 comporte encore un circuit commutateur, désigné par la référence 17, ayant deux entrées de signal recevant respectivement le signal SCFb et le signal SCFc, une entrée de commande recevant le signal SD produit par le comparateur 16 et une sortie fournissant le signal de consigne de puissance SCFa appliqué au circuit intégrateur 10c et mentionné ci-dessus. Ce circuit commutateur 17 est agencé de manière que le signal SCFa est sélectivement égal au signal SCFb ou au signal SCFc selon que le signal SD est dans son premier état SD1 ou, respectivement, son deuxième état SD2.

On voit que, grâce à l'agencement des circuits 16 et 17, le signal SCFa est toujours égal au plus petit des signaux SCFb et SCFc, ou à l'un et l'autre de ces signaux si ceux-ci sont égaux.

Les circuits 16 et 17 ne seront pas décrits en détail car il peuvent tous deux être réalisé de diverses manières bien connues des spécialistes.

Pour commencer la description du fonctionnement du véhicule 1, et plus particulièrement du fonctionnement du circuit de réglage 9, on admettra que le conducteur de ce véhicule 1 maintient depuis un certain temps la pédale d'accélérateur 8a dans une position où le signal SCF produit par le capteur 8b a une valeur SCF1 non nulle et inférieure à sa valeur maximale SCFmax, et qui est proportionnelle à une valeur FC1 de la puissance de consigne FC.

On admettra en outre que le véhicule 1 se déplace, également depuis un certain temps, sur un sol parfaitement plan et à une vitesse constante telle que le moteur 5 tourne à une vitesse W1 supérieure à la vitesse WA mentionnée ci-dessus.

Le signal de limitation SL a donc sa valeur maximale SLmax (voir la figure 3). La caractéristique du circuit multiplicateur 12 est donc celle qui est représentée par la droite C4a de la figure 4, et le signal SCFb produit par le circuit multiplicateur 12 a une valeur SCFb1 égale à la valeur SCF1 du signal SCF.

La puissance de consigne FCb a donc une valeur FCb1 égale à la valeur FC1 de la puissance de consigne FC.

Le signal SCFb ayant cette valeur SCFb1, le signal SCV produit par le circuit de traitement 13 a une valeur SCV1 (figure 5).

On admettra encore que le signal SCV a cette valeur SCV1 depuis un temps suffisant pour que la vitesse de rotation V du moteur 2 soit stabilisée à la valeur V1 égale à la valeur de consigne VC1 proportionnelle à cette valeur SCV1 du signal SCV.

Le signal SMV de mesure de la vitesse de rotation du moteur 2 a donc une valeur SMV1 égale à la valeur SCV1 du signal SCV, et le signal SP fourni par le comparateur 14 a sa valeur SPf.

La valeur P1 de la puissance mécanique P fournie par le moteur 2 est donc représentée par l'ordonnée du point de la courbe C2b de la figure 2 dont l'abscisse représente la valeur V1 de la vitesse de rotation de ce moteur 2.

Il découle de la caractéristique du circuit de traitement de signal 13 définie ci-dessus et représentée par la figure 5 que cette puissance P1 est égale à la somme de la puissance de consigne FCb1 mentionnée ci-dessus, dont on rappellera qu'elle est égale dans le cas présent à la puissance de consigne FC1, et des puissances DG et DC dissipées dans le générateur 3 et dans le circuit de commande 10a du moteur 5.

La puissance électrique E fournie par le générateur 3 a évidemment une valeur E1 égale à la différence entre la puissance P1 et la puissance dissipée DG, et donc aussi égale à la somme de la puissance de consigne FC1 et de la puissance DC dissipée dans le circuit de commande 10a.

Le signal SMV de mesure de la vitesse de rotation V du moteur 2 ayant la valeur SMV1 définie ci-dessus, le signal SCFc produit par le circuit de traitement de signal 15 a une valeur SCFc1, et la puissance de consigne FCc a une valeur FCc1 proportionnelle à cette valeur SCFc1 de ce signal SCFc.

Il découle de la caractéristique du circuit de traitement de signal 15 définie ci-dessus et représentée par la figure 6 que cette puissance de consigne FCc1 est égale à la différence entre, d'une part, la puissance P1 fournie par le moteur 2 et, d'autre part, la somme des puissances DG et DC dissipées dans le générateur 3 et dans le circuit de commande 10a du moteur 5.

On voit que cette puissance de consigne FCc1 est égale à la puissance de consigne FCb1, et qu'il en est donc de même des valeurs SCFc1 et SCFb1 des signaux SCFc et, respectivement, SCFb.

Le signal de consigne SCFa fourni par le commutateur 17 a donc une valeur SCFa1 égale à cette valeur SCFb1 dont on a vu ci-dessus qu'elle est elle même égale à la valeur SCF1 du signal SCF produit par le capteur 8b de la position de la pédale d'accélérateur 8a.

Si cette situation dure depuis assez longtemps, la puissance électrique F fournie par le circuit de commande 10a au moteur 5 a une valeur F1 qui est proportionnelle à la valeur SCFa1 du signal SCFa, et elle est donc égale à la puissance de consigne FC1 proportionnelle à la valeur SCF1 du signal SCF. Cette puissance électrique F1 correspond donc à la position de la pédale d'accélération 8a.

Pour que cette puissance électrique F puisse avoir cette valeur F1, il faut bien entendu que la puissance électrique E fournie par le générateur 3 au circuit de commande 10a ait une valeur égale à la somme de cette valeur F1 et de la puissance DC dissipée dans ce circuit de commande 10a.

Ceci est bien le cas, puisqu'on a vu ci-dessus que cette puissance électrique E a une valeur E1 égale à la somme de la puissance de consigne FC1 et de la puissance DC dissipée dans le circuit de commande 10a, et que la puissance F1 est égale à cette puissance de consigne FC1.

Cette situation, qui peut être désignée comme étant une situation d'équilibre, se maintient tant que le conducteur du véhicule 1 ne modifie pas la position de la pédale d'accélérateur 8a et que la pente du sol sur lequel route ce véhicule 1 ne change pas.

Lorsque le véhicule 1 est dans la situation qui vient d'être décrite et que son conducteur désire augmenter sa vitesse ou maintenir constante cette vitesse malgré une augmentation de la pente du sol sur lequel route ce véhicule 1, il déplace la pédale d'accélérateur 8a en direction de sa butée de fin de course jusqu'à une position où le signal SCF prend, par exemple, une valeur SCF2 supérieure à la valeur SCF1 précédente et proportionnelle à une nouvelle puissance de consigne SCF2 également supérieure à la puissance de consigne SCF1 précédente.

La vitesse de rotation W du moteur 5 étant toujours supérieure à la vitesse WA, le signal SL a toujours sa valeur SLmax, et le signal SCFb produit par le circuit multiplicateur 12 prend une valeur SCFb2 égale à la valeur SCF2 du signal SCF (figure 4).

En réponse à cette valeur SCFb2 du signal SCFb, le signal SCV produit par le circuit de traitement 13 prend une nouvelle valeur SCV2 supérieure à la valeur SCV1 précédente (figure 5).

La vitesse de rotation V du moteur 2 ne pouvant évidemment pas augmenter instantanément jusqu'à la valeur V2 égale à la vitesse de consigne VC2 proportionnelle à cette nouvelle valeur SCV2 du signal SCV, cette dernière valeur SCV2 est évidemment supérieure, dans un premier temps tout au moins, à la valeur SMV1 du signal de mesure de la vitesse de rotation V de ce moteur 2.

Le signal SP fourni par le comparateur 14 prend donc sa valeur maximale SPmax, et le papillon du carburateur 2a du moteur 2 s'ouvre complètement.

La puissance mécanique P fournie par le moteur 2 augmente donc jusqu'à une valeur P1' (figure 2).

Comme on le verra ci-après, cette augmentation de la puissance P a pour effet d'augmenter la vitesse de rotation V du moteur 2 jusqu'à la vitesse V2 égale à la vitesse de consigne VC2.

Cependant, tant que cette vitesse de rotation V n'a pas atteint cette valeur V2, le signal SMV de mesure de cette vitesse V reste inférieur à la nouvelle valeur SCV2 du signal SCV, et le signal de consigne de puissance SCFc produit par le circuit de traitement 15 reste inférieur à la nouvelle valeur SCFb2 du signal SCFb.

Le comparateur 16 donne donc au signal SD son deuxième état SD2, de sorte que le signal SCFa fourni par le commutateur 17 est égal au signal SCFc, et que la puissance de consigne FCa à laquelle le circuit d'asservissement 10 asservit la puissance électrique F fournie au moteur 5 est égale à la puissance de consigne FCc proportionnelle à ce signal SCFc.

On rappellera que le circuit de traitement de signal 15 est agencé de manière que cette puissance de consigne FCc est toujours égale à la différence entre la fraction f de la puissance mécanique maximale Pmax que le moteur 2 peut fournir à la vitesse à laquelle il tourne et la somme des puissances dissipées DG et DC.

Puisque le signal SP a pris sa valeur SPmax et que la puissance mécanique P a pris la valeur P1' comme cela a été montré ci-dessus, la puissance électrique F fournie par le circuit de commande 10a au moteur 5, qui est asservie à la puissance de consigne FCc puisque la valeur du signal SCFa est égale à la valeur du signal SCFc, est donc inférieure à la différence entre cette puissance mécanique P1' et la somme des puissances dissipées DC et DC.

Cette puissance mécanique P1' est donc supérieure à celle que le générateur 3 absorbe, et la vitesse V de rotation du moteur 2 augmente jusqu'à ce que le signal SMV atteigne la valeur SMV2 égale à la valeur SCV2 du signal SCV.

Lorsque ce signal SMV atteint cette valeur SMV2, le circuit comparateur 14 redonne au signal SP sa valeur SPf, et la puissance P, qui avait augmenté de sa valeur P1' à sa valeur P2', diminue jusqu'à sa valeur P2 (figure 2).

Pendant l'accélération du moteur 2, le signal de consigne SCFc augmente évidemment en même temps que le signal SMV et passe de sa valeur SCFc1 à sa valeur SCFc2. Mais tant qu'il n'a pas atteint cette valeur SCFc2, il reste inférieur au signal SCFb, de sorte que le signal SCFa est toujours égal à ce signal SCFc.

Il en découle que la puissance de consigne FCa à laquelle le circuit 10 asservit la puissance électrique F fournie par le circuit de commande 10a du moteur 5 augmente en même temps que la vitesse de rotation V du moteur 2 et reste toujours égale à la différence entre la puissance mécanique P que le moteur 2 fournirait si le signal SP avait sa valeur SPf et la somme des puissances dissipées DG et DC. En outre, cette puissance de consigne FCa reste inférieure à la puissance de consigne FCb2 proportionnelle à la valeur SCFb2 du signal SCFb.

Ce n'est que au moment ou la vitesse de rotation V du moteur 2 atteint sa valeur V2 et que la puissance mécanique P fournie par ce dernier diminue jusqu'à la valeur P2 comme cela a été mentionné ci-dessus que la puissance de consigne FCc, et donc la puissance de consigne FCa, atteignent la valeur FCb2 de la puissance de consigne FCb.

Depuis cet instant, et tant que la position de la pédale d'accélérateur 8a n'est pas modifiée et que la pente du sol sur lequel roule le véhicule 1 ne change pas, la situation qui vient d'être décrite reste stable.

Si le conducteur du véhicule 1 désire diminuer la vitesse de celui-ci ou la maintenir constante malgré une diminution de la pente du sol sur lequel roule ce véhicule 1, il déplace la pédale d'accélérateur 8a en direction de sa position de repos jusqu'à une position où le signal SCF prend, par exemple, une valeur SCF3 inférieure à la valeur SCF2 précédente et proportionnelle à une nouvelle puissance de consigne FC3 également inférieure à la puissance de consigne FC2 précédente.

La vitesse de rotation W du moteur 5 étant évidemment toujours supérieure à la vitesse WA, le signal SL a toujours sa valeur SLmax, et le signal SCFb prend une valeur SCFb3 égale à la valeur SCF3 du signal SCF (figure 4).

En réponse à cette valeur SCFb3 du signal SCFb, le signal SCV prend une nouvelle valeur SCV3 inférieure à la valeur SCV2 précédente (figure 5).

La vitesse de rotation V du moteur 2 ne pouvant évidemment pas diminuer instantanément jusqu'à la valeur V3 égale à la vitesse de consigne VC3 proportionnelle à cette nouvelle valeur SCV3 du signal SCV, cette dernière valeur SCV3 est évidemment inférieure à la valeur SMV2 du signal de mesure de la vitesse de rotation V de ce moteur 2, dans un premier temps tout au moins.

Le signal SP fourni par le comparateur 14 prend donc sa valeur minimale SPmin, et le papillon du carburateur 2a du moteur se ferme complètement.

La puissance mécanique P fournie par le moteur 2 devient donc pratiquement nulle, et la vitesse de rotation de ce moteur 2 diminue jusqu'à ce qu'elle atteigne la valeur V3 égale à la nouvelle valeur de consigne VC3.

Cependant, tant que cette vitesse de rotation V n'a pas atteint cette valeur V3, le signal SMV de mesure de cette vitesse V reste supérieur à la nouvelle valeur SCV3 du signal SCV, et le signal de consigne de puissance SCFc produit par le circuit de traitement 15 reste supérieur à la nouvelle valeur SCFb3 du signal SCFb.

Le comparateur 16 donne donc au signal SD son premier état SD1, de sorte que le signal SCFa fourni par le commutateur 17 prend immédiatement une valeur SCFa3 égale à la valeur SCFb3 du signal SCFb.

La puissance de consigne FCa à laquelle le circuit d'asservissement 10 asservit la puissance électrique F fournie par le circuit de commande 10a au moteur 5 prend donc, également immédiatement, la valeur FCa3 égale à la valeur FCb3 de la puissance de consigne FCb, dont on a vu ci-dessus qu'elle est égale à la nouvelle valeur FC3 de la puissance de consigne FC.

Lorsque la vitesse de rotation V du moteur 2 atteint la valeur V3 et que le signal SMV atteint donc sa valeur SMV3 égale à la valeur SCV3 du signal de consigne de vitesse SCV, le circuit comparateur 14 redonne au signal SP sa valeur SPf et la puissance mécanique P fournie par le moteur 2 prend la valeur P3. On voit facilement que cette valeur P3 de la puissance mécanique P est celle qui est égale à la somme de la puissance de consigne FCa3, qui est elle-même égale à la puissance de consigne FC3, et des puissances NG et DC dissipées dans le générateur 3 et le circuit de commande 10a.

Cette situation reste également stable tant que la position de la pédale d'accélérateur 8a n'est pas modifiée et/ou que la pente du sol sur lequel roule le véhicule 1 ne change pas.

Considérons maintenant le cas où le véhicule 1 est arrêté et où la pédale d'accélérateur 8a est dans sa position de repos depuis un certain temps.

Le signal SCFb est donc nul et le signal SCV a, par conséquent, sa valeur SCVr (figure 5). Le moteur 2 tourne à sa vitesse Vr de ralenti, de sorte que le signal SMV a sa valeur SMVr égale à la valeur SCVr. Le signal SCFc est donc nul (figure 6) de même que le signal SCFa, et le circuit de commande 10a ne fournit aucune puissance électrique F au moteur 5.

D'autre part, le signal de mesure SMW de la vitesse de rotation W du moteur 5 est nul, et le signal de limitation SL a donc sa valeur minimale SLmin (figure 3).

Si le conducteur du véhicule 1 appuie alors sur la pédale d'accélérateur 8a dans l'intention de faire démarrer ce véhicule 1, le signal SCF prend une valeur correspondant à la nouvelle position de cette pédale 8a. On admettra que ce signal SCF prend la valeur SCF1 déjà utilisée ci-dessus. (Cette valeur SCF1 a été choisie arbitrairement, dans le but de ne pas charger inutilement le dessin).

Le signal SL ayant sa valeur SLmin, la valeur du signal SCFb est représentée par l'ordonnée du point de la droite C4b de la figure 4 dont l'abscisse est représentée par la valeur SCF1 du signal SCF. Cette valeur du signal SCFb a été désignée par SCFb1a.

En réponse à cette valeur SCFb1a du signal SCFb, le circuit de traitement 13 donne au signal SCV une valeur SCV1a, qui est évidemment supérieure à la valeur SCVr.

Le moteur 2 tournant encore au ralenti et le signal SMV ayant donc encore sa valeur SMVr, le comparateur 14 donne au signal SP sa valeur SPmax, et la puissance mécanique P fournie par le moteur 2 prend la valeur Pr' représentée par l'ordonnée du point de la courbe C2a dont l'abcisse représente la vitesse de rotation Vr. Cette puissance Pr' étant supérieure à celle qui est absorbée par le générateur 3, la vitesse de rotation V du moteur 2 commence à augmenter et tend vers la vitesse V1a proportionnelle à la valeur SCV1a du signal SCV. Simultanément, la puissance mécanique P augmente et tend vers la valeur P1a représentée par l'ordonnée du point de la courbe C2a dont l'abcisse représente la vitesse V1a.

Le signal SCFc commence donc également à augmenter, mais reste évidemment, au moins dans un premier temps, inférieur à la valeur SCFb1a du signal SCFb.

Le signal SCFa a donc la même valeur que le signal SCFc et augmente évidemment en même temps que ce dernier. La puissance électrique F fournie par le circuit de commande 10a au moteur 5 augmente donc aussi, et dès qu'elle atteint une valeur suffisante, le véhicule 1 commence à se déplacer.

La vitesse de rotation W du moteur 5 commence donc à augmenter, de même évidemment que la valeur du signal SMW. Le signal SL augmente donc, de sorte que le signal SCFb augmente également, de même que le signal SCV.

La signal SMV reste, au moins au début de ce processus, inférieur au signal SCV, de sorte que le signal SP garde sa valeur SPmax et que la puissance mécanique P fournie par le moteur 2 garde sa valeur Pmax, qui augmente évidemment en même temps que la vitesse de rotation V de ce moteur 2 (courbe C2a de la figure 2).

Cette augmentation de la vitesse de rotation V du moteur 2 entraîne une augmentation correspondante du signal SMV et donc du signal SCFc.

Tant que le signal SMV reste inférieur au signal SCV, le signal SP garde sa valeur SPmax, et la puissance mécanique P fournie par le moteur 2 est toujours égale à la puissance mécanique maximale Pmax que ce moteur 2 peut fournir à la vitesse V où il tourne.

En outre, le signal SCFa reste égal au signal SCFc et la puissance électrique F fournie par le circuit de commande 10a au moteur 5 est donc toujours proportionnelle à ce signal SCFc et augmente comme ce dernier.

La puissance mécanique P est donc toujours supérieure à la somme de cette puissance électrique F et des puissances dissipées DG et DC, de sorte que la vitesse de rotation V du moteur 2 continue à augmenter.

Ce processus continue jusqu'à ce que le signal SMV devienne égal au signal SCV et que le comparateur 14 redonne donc au signal SP sa valeur SPf. Dès ce moment, le signal SCFc et le signal SCFa sont égaux au signal SCFb.

Si, au cours de ce processus, la vitesse du véhicule 1 a atteint une valeur supérieure à celle pour laquelle la vitesse de rotation W du moteur 5 est égale à la vitesse WA, le signal SL a pris sa valeur SLmax, et le signal SCFb a la valeur SCFb1 égale à la valeur SCF1 du signal SCF, et le signal SCFa a bien entendu également cette valeur SCF1.

Le véhicule 1 se trouve donc alors dans une situation semblable à celle qui a été décrite ci-dessus.

Si par contre, lorsque le signal SMV devient égal au signal SCV, la vitesse du véhicule 1 est telle que la vitesse de rotation W du moteur 5 a une valeur inférieure à la vitesse WA, par exemple la valeur Wx indiquée à la figure 3, la valeur correspondante SLx du signal SL est encore inférieure à sa valeur maximale SLmax.

La caractéristique du circuit multiplicateur 12 est donc représentée, dans ce cas, par la droite C4x de la figure 4, et la valeur SCFbx du signal SCFb est donnée par l'ordonnée du point de cette droite C4x dont l'abscisse représente la valeur SCF1 du signal SCF.

Le signal SCV a donc la valeur correspondante SCVx (figure 5) et le signal SMV a la valeur SMVx égale à cette valeur SCVx.

Le moteur 2 fournit donc la puissance mécanique Px indiquée à la figure 2, et le signal SCFc a la valeur SCFcx égale à la valeur SCFbx du signal SCFb. Le signal SCFa a donc une valeur SCFax égale à cette dernière valeur SCFbx, et la puissance électrique F fournie par le circuit de commande 10a au moteur 2 a une valeur Fx proportionnelle à cette valeur SCFbx.

Comme cela ressort clairement de la description de divers modes de fonctionnement du véhicule 1 qui vient d'être faite, la présence des circuits 13 à 17 dans le circuit de réglage 9 a pour effet que la puissance électrique F fournie par le circuit de commande 10a au moteur électrique de traction 5 augmente immédiatement lorsque le conducteur de ce véhicule 1 appuie sur la pédale d'accélérateur 8a, en même temps que la vitesse de rotation V du moteur 2, contrairement à ce qui se produit dans les véhicules connus du même genre. De plus, cette augmentation de cette puissance électrique F est progressive, puisqu'elle dépend directement de l'augmentation de la puissance mécanique P qui se produit pendant que le moteur à explosion 2 accélère. Il en découle qu'un véhicule selon la présente invention a un comportement très proche de celui des véhicules classiques dont le moteur de traction est un moteur à explosion et que le danger que peut créer, dans les véhicules connus du même genre, le délai qui sépare l'instant où leur conducteur appuie sur leur pédale d'accélérateur de l'instant où la puissance électrique fournie à leur moteur de traction augmente est supprimé.

Enfin, on voit que dans un véhicule selon la présente invention, la puissance électrique F fournie par le circuit de commande 10a au moteur de traction 5 ne dépasse jamais la valeur maximale FM définie ci-dessus, et ceci grâce à la présence dans ce véhicule 1 du dispositif de mesure 7 de la vitesse de rotation W du moteur 5, du circuit de traitement de signal 11 et du circuit multiplicateur 12.

Il en découle que les composants du circuit de commande 10a qui sont traversés par le courant absorbé par le moteur de traction 5 peuvent avoir un courant nominal plus faible, et donc un encombrement plus réduit et un prix plus bas, toutes autres choses étant égales, que les composants correspondants des véhicules connus.

Il faut noter que les divers rapports de proportionnalité mentionnés dans la description qui vient d'être faite n'ont été définis comme étant tous égaux que pour simplifier cette description. Il est en effet possible de donner à ces divers rapports de proportionnalité des valeurs différentes, les divers composants du schéma de la figure 1 étant alors agencés en conséquence.

De nombreuses modifications peuvent être apportées au véhicule décrit ci-dessus et représenté par la figure 1 sans pour autant que celui-ci sorte du cadre de la présente invention tel qu'il est défini par les revendications.

Ainsi, par exemple, il est possible d'agencer le circuit de comparaison 14 de manière que le signal SP de commande du carburateur 2a du moteur 2 ne change pas brusquement comme cela a été décrit ci-dessus, mais au contraire progressivement, entre ses valeurs SPmax, SPf et SPmin.

L'homme du métier verra en effet qu'il peut être avantageux de faire changer ce signal SP de manière progressive, notamment lorsqu'il doit passer de ses valeurs SPmax ou SPmin à sa valeur SPf, afin d'éviter une oscillation de la vitesse de rotation V du moteur 2 autour de la valeur pour laquelle le signal SMV est égal au signal de consigne SCV.

Toujours par exemple, il est possible d'intercaler un circuit temporisateur entre la sortie du circuit de traitement de signal 15 et l'entrée du commutateur 17 qui reçoit le signal SCFc dans le schéma de la figure 1 pour retarder l'augmentation du signal appliqué à cette entrée, et donc l'augmentation du signal de consigne de puissance SCFa, pendant que la vitesse de rotation V du moteur 2 augmente.

Grâce au retard introduit par ce temporisateur, la portion de la puissance mécanique P fournie par le moteur 2 qui est disponible pour l'accélération de celui-ci augmente, de sorte que cette accélération est plus importante que dans le cas représenté à la figure 1 et que ce moteur 2 atteint plus rapidement sa nouvelle vitesse de rotation.

Il faut encore relever que la présente invention n'est pas limitée au cas décrit ci-dessus d'un véhicule n'ayant qu'une roue motrice, mais qu'elle s'applique évidemment aussi au cas des véhicules ayant plusieurs roues motrices entraînées par un moteur de traction commun, ainsi qu'aux cas des véhicules ayant plusieurs moteurs de traction entraînant chacun une ou plusieurs roues motrices.

## Revendications

1. Véhicule automobile (1) comportant :

   - un premier moteur (2) constitué par un moteur à combustion interne pour produire une puissance mécanique (P) en fonction de la vitesse de rotation dudit premier moteur (2);
   - des moyens d'asservissement de vitesse (2a,4,14) comportant des premiers moyens de mesure (4) couplés audit premier moteur (2) pour fournir un premier signal de mesure (SMV) représentatif de la vitesse de rotation (V) dudit premier moteur (2) et répondant à un signal de consigne de vitesse (SCV) représentatif d'une vitesse de rotation de consigne (VC) pour asservir ladite vitesse de rotation (V) dudit premier moteur (2) à ladite vitesse de rotation de consigne (VC);
   - un dispositif de commande (8) comportant un organe de commande (8a) actionnable par un conducteur dudit véhicule (1) et un détecteur (8b) couplé audit organe de commande (8a) pour fournir un premier signal de consigne de puissance (SCF) représentatif de la position dudit organe de commande (8a) et d'une première puissance de consigne (FC);
   - un générateur (3) couplé mécaniquement audit premier moteur (2) pour produire une première puissance électrique (E) en réponse à ladite puissance mécanique (P);
   - une roue motrice (6);
   - un deuxième moteur (5) constitué par un moteur électrique couplé mécaniquement à ladite roue motrice (6); et
   - des moyens de réglage (9) répondant à ladite première puissance électrique (E) pour fournir une deuxième puissance électrique (F) audit deuxième moteur (5) et répondant audit premier signal de consigne de puissance (SCF) pour produire ledit signal de consigne de vitesse (SCV) et pour asservir ladite deuxième puissance électrique (F) à ladite première puissance de consigne (FC);
   caractérisé par le fait que ledit véhicule (1) comporte en outre des deuxièmes moyens de mesure (7) couplés audit deuxième moteur (5) pour fournir un deuxième signal de mesure (SMW) représentatif de la vitesse de rotation (W) dudit deuxième moteur (5);
   et par le fait que lesdits moyens de réglage (9) comportent :

   - des moyens d'asservissement de puissance (10) répondant à un deuxième signal de consigne de puissance (SCFa) représentatif d'une deuxième puissance de consigne (FCa) pour asservir ladite deuxième puissance électrique (F) à ladite deuxième puissance de consigne (FCa);
   - des moyens de sécurité (11,12) répondant audit premier signal de consigne de puissance (SCF) et audit deuxième signal de mesure (SMW) pour fournir un troisième signal de consigne de puissance (SCFb) représentatif d'une troisième puissance de consigne (FCb) et agencés de manière que ledit troisième signal de consigne de puissance (SCFb) a une valeur telle que ladite troisième puissance de consigne (FCv) est au plus égale à la puissance électrique maximale (FM) que lesdits moyens d'asservissement (10) peuvent fournir sans dommage audit deuxième moteur (5);
   - des premiers moyens de traitement de signal (13) répondant audit troisième signal de consigne de puissance (SCFb) pour fournir ledit signal de consigne de vitesse (SCV) et agencés de manière que ledit signal de consigne de vitesse (SCV) a une valeur telle que, lorsque la vitesse de rotation (V) dudit premier moteur (2) est égale à ladite vitesse de consigne (VC), une fraction déterminée (f) de la puissance mécanique maximale (Pmax), qui est une fonction de la vitesse de rotation dudit premier moteur (2), est égale à la somme de ladite troisième puissance de consigne (FCb) et des puissances dissipées (DG,DC) dans ledit générateur (3) et dans lesdits moyens d'asservissement de puissance (10);
   - des deuxièmes moyens de traitement de signal (15) répondant audit premier signal de mesure (SMV) pour fournir un quatrième signal de consigne de puissance (SCFc) représentatif d'une quatrième puissance de consigne (FCc) et agencés de manière que ledit quatrième signal de consigne de puissance (SCFc) a une valeur telle que ladite quatrième puissance de consigne (FCc) est égale à la différence entre ladite fraction déterminée (f) de ladite puissance mécanique maximale (Pmax) et lesdites puissances dissipées (DG,DC); et
   - des moyens de sélection (16,17) répondant audit troisième signal de consigne de puissance (SCFb) et audit quatrième signal de consigne de puissance (SCFc) pour fournir ledit deuxième signal de consigne de puissance (SCFa) et agencés de manière que ledit deuxième signal de consigne de puissance (SCFa) a une valeur telle que ladite deuxième puissance de consigne (FCa) est égale à la plus petite desdites troisième puissance de consigne (FCb) et quatrième puissance de consigne (FCc).

2. Véhicule automobile (1) selon la revendication 1, caractérisé par le fait que lesdits moyens de sécurité (11,12) comportent des troisièmes moyens de traitement de signal (11) répondant audit deuxième signal de mesure (SMW) pour fournir un signal de limitation (SL) représentatif de ladite puissance électrique maximale (FM) et des moyens de calcul (12) répondant audit premier signal de consigne de puissance (SCF) et audit signal de limitation (SL) pour produire ledit troisième signal de consigne de puissance (SCFb).

3. Véhicule automobile (1) selon la revendication 1, caractérisé par le fait que lesdits moyens d'asservissement (2a,4,14) comportent en outre :

   - des moyens de commande (2a) de ladite puissance mécanique (P) répondant à un signal de commande de puissance (SP) et agencés de manière que ladite puissance mécanique (P) est égale à ladite puissance mécanique maximale (Pmax), égale à ladite fraction déterminée (f) de ladite puissance mécanique maximale (Pmax) et sensiblement nulle selon que ledit signal de commande de puissance (SP) a respectivement une première valeur (SPmax), une deuxième valeur (SPf) et une troisième valeur (SPmin); et
   - des moyens de comparaison (14) répondant audit signal de consigne de vitesse (SCV) et audit premier signal de mesure (SMV) pour produire ledit signal de commande de puissance (SP) et agencé de manière que ledit signal de commande de puissance (SP) a ladite première valeur (SPmax), ladite deuxième valeur (SPf) et ladite troisième valeur (SPmin) selon que ledit signal de consigne de vitesse (SCV) est respectivement supérieur, égal et inférieur audit premier signal de mesure (SMV).

4. Véhicule automobile (1) selon la revendication 1, caractérisé par le fait que lesdits moyens de sélection (16,17) comportent :

   - des moyens de comparaison (16) répondant audit troisième signal de consigne de puissance (SCFb) et audit quatrième signal de consigne de puissance (SCFc) pour fournir un signal de commutation (SD) et agencés de manière que ledit signal de commutation (SD) a un premier état (SD1) et un deuxième état (SD2) selon que ledit troisième signal de consigne de puissance (SCFb) est respectivement inférieur et supérieur audit quatrième signal de consigne de puissance (SCFc); et
   - des moyens de commutation (17) répondant audit signal de commutation (SD), audit troisième signal de consigne de puissance (SCFb) et audit quatrième signal de consigne de puissance (SXFc) pour fournir ledit deuxième signal de consigne de puissance (SCFa) et agencés de manière que ledit deuxième signal de consigne de puissance (SCFa) a une valeur telle que ladite deuxième puissance de consigne (FCa) est égale à ladite troisième puissance de consigne (FCb) ou à ladite quatrième puissance de consigne (FCc) selon que ledit signal de commutation (SD) est respectivement dans son premier état (SD1) et dans son deuxième état (SD2).

5. Véhicule automobile (1) selon la revendication 1, caractérisé par le fait que ladite fraction déterminée (f) est sensiblement égale à 80%.

## Claims

1. Motor vehicle (1) comprising:

   - a first engine (2) constituted by an internal combustion engine for producing a mechanical power (P) as a function of the rotation speed of said first engine (2);
   - speed slaving means (2a, 4, 14) comprising first measurement means (4) coupled to said first engine (2) for providing a first measurement signal (SMV) representative of the rotation speed (V) of said first engine (2) and responding to a desired speed signal (SCV) representative of a desired rotation speed (VC) for slaving said rotation speed (V) of said first engine (2) to said desired rotation speed (VC);
   - a control device (8) comprising a control member (8a) able to be actuated by a driver of said vehicle (1) and a detector (8b) coupled to said control member (8a) for providing a first desired power signal (SCF) representative of the position of said control member (8a) and of a first desired power (FC).
   - a generator (3) mechanically coupled to said first engine (2) for producing a first electrical power (E) in response to said mechanical power (P);
   - a drive wheel (6);
   - a second engine (5) constituted by an electric motor mechanically coupled to said drive wheel (6); and
   - regulating means (9) responding to said first electric power (E) for supplying a second electric power (F) to said second engine (5) and responding to said first desired power signal (SCF) for producing said desired speed signal (SCV) and for slaving said second electric power (F) to said first desired power (FC);

characterized in that said vehicle (1) further comprises second measurement means (7) coupled to said second engine (5) for supplying a second measurement signal (SMW) representative of the rotation speed (W) of said second engine (5);

and in that said regulating means (9) comprise:

- power slaving means (10) responding to a second desired power signal (SCFa) representative of a second desired power (FCa) for slaving said second electric power (F) to said second desired power (FCa);
- safety means (11, 12) responding to said first desired power signal (SCF) and to said second measurement signal (SMW) for providing a third desired power signal (SCFb) representative of a third desired power (FCb) and arranged so that said third desired power signal (SCFb) has a value such that said third desired power (FCv) is at most equal to the maximum electric power (FM) that said slaving means (10) can supply without being damaged to said second engine (5);
- first signal processing means (13) responding to said third desired power signal (SCFb) for providing said desired speed signal (SCV) and arranged so that said desired speed signal (SCV) has a value such that, when the rotation speed (V) of said first engine (2) is equal to said desired speed (VC), a determined fraction (f) of the maximum mechanical power (Pmax), which is a function of the rotation speed of said first engine (2), is equal to the sum of said third desired power (FCb) and the powers (DG, DC) dissipated in said generator (3) and in said power control means (10);
- second signal processing means (15) responding to said first measurement signal (SMV) for providing a fourth desired power signal (SCFc) representative of a fourth desired power (FCc) and arranged so that said fourth desired power signal (SCFc) has a value such that said fourth desired power (FCc) is equal to the difference between said determined fraction (f) of said maximum mechanical power (Pmax) and said dissipated powers (DG, DC); and
- selection means (16, 17) responding to said third desired power signal (SCFb) and to said fourth desired power signal (SCFc) for providing said second desired power signal (SCFa) and arranged so that said second desired power signal (SCFa) has a value such that said second desired power (FCa) is equal to the smallest of said third desired power (FCb) and said fourth desired power (FCc).

2. Motor vehicle (1) according to claim 1, characterized in that said safety means (11, 12) comprise third signal processing means (11) responding to said second measurement signal (SMW) for providing a limitation signal (SL) representative of said maximum electric power (FM) and calculating means (12) responding to said first desired power signal (SCF) and to said limitation signal (SL) for producing said third desired power signal (SCFb).

3. Motor vehicle (1) according to claim 1, characterized in that said slaving means (2a, 4, 14) also comprise:

- means for controlling (2a) said mechanical power (P) responding to a power control signal (SP) and arranged so that said mechanical power (P) is equal to said maximum mechanical power (Pmax), equal to said determined fraction (f) of said maximum mechanical power (Pmax) and substantially zero according to whether said power control signal (SP) has respectively a first value (SPmax), a second value (SPf) and a third value (SPmin); and
- comparator means (14) responding to said desired speed signal (SCV) and to said first measurement signal (SMV) for producing said power control signal (SP) and arranged so that said power control signal (SP) has said first value (SPmax), said second value (SPf) and said third value (SPmin) according to whether said desired speed signal (SCV) is respectively greater than, equal to or less than said first measurement signal (SMV).

4. Motor vehicle (1) according to claim 1, characterized in that said selection means (16, 17) comprise:

- comparator means (16) responding to said third desired power signal (SCFb) and to said fourth desired power signal (SCFc) for providing a switching signal (SD) and arranged so that said switching signal (SD) has a first state (SD1) and a second state (SD2) according to whether said third desired power signal (SCFb) is respectively less or greater than said fourth desired power signal (SCFc); and
- switch means (17) responding to said switching signal (SD), to said third desired power signal (SCFb) and to said fourth desired power signal (SCFc) for providing said second desired power signal (SCFa) and arranged so that said second desired power signal (SCFa) has a value such that said second desired power (FCa) is equal to said third desired power (FCb) or to said fourth desired power (FCc) according to whether said switching signal (SD) is respectively in its first state (SD1) or in its second state (SD2).

5. Motor vehicle (1) according to claim 1, characterized in that said determined fraction (f) is substantially equal to 80%.

## Patentansprüche

1. Kraftfahrzeug (1), umfassend:

   - einen ersten Motor (2), gebildet von einem Brennkraftmotor zum Erzeugen einer mechanischen Leistung (P) in Abhängigkeit von der Drehgeschwindigkeit des ersten Motors (2);
   - Geschwindigkeitsregelmittel (2a,4,14), umfassend erste Meßmittel (4), die mit dem ersten Motor (2) gekoppelt sind, um ein erstes Meßsignal (SMV) zu liefern, das für die Drehgeschwindigkeit (V) des ersten Motors (2) repräsentativ ist, und auf ein Geschwindigkeits-Soll -Signal (SCV) reagieren, das repräsentativ für eine Soll-Drehgeschwindigkeit (VC) ist, um die Drehgeschwindigkeit (V) des ersten Motors (2) auf die Soll-Drehgeschwindigkeit (VC) zu regeln;
   - eine Steuervorrichtung (8), umfassend ein Steuerorgan (8a), das von einem Fahrer des Fahrzeugs (1) betätigbar ist, und einen Detektor (8b) umfaßt, gekoppelt mit dem Steuerorgan (8a), um ein erstes Leistungs-Soll-Signal (SCF) zu liefern, das repräsentativ für die Position des Steuerorgans (8a) ist, und eine erste Soll-Leistung (FC);
   - einen mechanisch mit dem ersten Motor (2) gekoppelten Generator (3) zum Erzeugen einer ersten elektrischen Leistung (E) in Reaktion auf die mechanische Leistung (P);
   - ein Antriebsrad (6);
   - einen zweiten Motor (5), gebildet von einem mechanisch mit dem Antriebsrad (6) gekoppelten Elektromotor; und
   - Regelungsmittel (9), die auf die erste elektrische Leistung (E) reagieren, um eine zweite elektrische Leistung (F) an den zweiten Motor (5) zu liefern, und auf das erste Leistungs-Soll-Signal (SCF) reagieren, um das Soll-Signal der Geschwindigkeit (SCV) zu erzeugen und um die zweite elektrische Leistung (F) auf die erste Soll-Leistung (FC) zu regeln; dadurch gekennzeichnet, daß das Fahrzeug (1) ferner zweite Meßmittel (7) umfaßt, gekoppelt mit dem zweiten Motor (5), um ein zweites Meßsignal (SMW) zu liefern, das repräsentativ für die Drehgeschwindigkeit (W) des zweiten Motors (5) ist; und daß die Regelungsmittel (9) umfassen:
   - Leistungsregelungsmittel (10), die auf ein zweites Leistungs-Soll-Signal (SCFa) reagieren, das repräsentativ für eine zweite Soll-Leistung (FCa) ist, um die zweite elektrische Leistung (F) auf die zweite Soll-Leistung (FCa) zu regeln;
   - Sicherheitsmittel (11,12), die auf das erste Leistungs-Soll-Signal (SCF) und auf das zweite Meßsignal (SMW) reagieren, um ein drittes Leistungs-Soll-Signal (SCFb) zu liefern, das repräsentativ für eine dritte Soll-Leistung (FCb) ist, und derart ausgebildet sind, daß das dritte Leistungs-Soll-Signal (SCFb) einen Wert derart hat, daß die dritte Soll-Leistung (FCv) höchstens gleich der maximalen elektrischen Leistung (FM) ist, welche die Regelungsmittel (10) ohne Beschädigung des zweiten Motors (5) liefern können;
   - erste Signalverarbeitungsmittel (13), die auf das dritte Leistungs-Soll-Signal (SCFb) reagieren, um das Geschwindigkeits-Soll-Signal (SCV) zu liefern, und derart ausgebildet sind, daß das Geschwindigkeits-Soll-Signal (SCV) einen Wert derart hat, daß, wenn die Drehgeschwindigkeit (V) des ersten Motors (2) gleich der Soll-Geschwindigkeit (VC) ist, ein bestimmter Bruchteil (f) der maximalen mechanischen Leistung (Pmax), der eine Funktion der Drehgeschwindigkeit des ersten Motors (2) ist, gleich einer Summe der dritten Soll-Leistung (FCb) und der in dem Generator (3) und in den Leistungsregelungsmitteln (10) umgesetzten Leistung (DG,DC) ist;
   - zweite Signalverarbeitungsmittel (15), die auf das erste Meßsignal (SMV) reagieren zum Liefern eines vierten Leistungs-Soll-Signals (SCFc), das repräsentativ für eine vierte Soll-Leistung (FCc) ist, und derart ausgebildet sind, daß das vierte Leistungs-Soll-Signal (SCFc) einen Wert derart hat, daß die vierte Soll-Leistung (FCc) gleich der Differenz zwischen dem bestimmten Bruchteil (f) der maximalen mechanischen Leistung (Pmax) und den umgesetzten Leistungen (DG,DC) ist; und
   - Wählmittel (16,17), die auf das dritte Leistungs-Soll-Signal (SCFb) und auf das vierte Leistungs-Soll-Signal (SCFc) reagieren, um das zweite Leistungs-Soll-Signal (SCFa) zu liefern, und derart ausgebildet sind, daß das zweite Leistungs-Soll-Signal (SCFa) einen Wert derart hat, daß die zweite Soll-Leistung (FCa) gleich der kleinsten der dritten Soll-Leistung (FCb) und vierten Soll-Leistung (FCc) ist.

2. Kraftfahrzeug (1) nach Anspruch 1, dadurch gekennzeichnet, daß die Sicherheitsmittel (11,12) dritte Signalverarbeitungsmittel (11) umfassen, die auf das zweite Meßsignal (SMW) reagieren, um ein Begrenzungssignal (SL) zu liefern, das repräsentativ für die maximale elektrische Leistung (FM) ist, und Berechnungsmittel (12) umfassen, die auf das erste Leistungs-Soll-Signal (SCF) und auf das Begrenzungssignal (SL) reagieren, um das dritte Leistungs-Soll-Signal (SCFb) zu erzeugen.

3. Kraftfahrzeug (1) nach Anspruch 1, dadurch gekennzeichnet, daß die Regelungsmittel (2a,4,14) ferner umfassen:

- Steuermittel (2a) der mechanischen Leistung (P), die auf ein Leistungssteuersignal (SP) reagieren und derart ausgebildet sind, daß die mechanische Leistung (P) gleich der maximalen mechanischen Leistung (Pmax) ist gleich dem bestimmten Bruchteil (f) der maximalen mechanischen Leistung (Pmax) und im wesentlichen Null, je nachdem, ob das Leistungssteuersignal (SP) einen ersten Wert (SPmax), einen zweiten Wert (SPf) bzw. einen dritten Wert (SPmin) annimmt; und
- Vergleichermittel (14), die auf das Geschwindigkeits-Soll-Signal (SCV) und auf das erste Meßsignal (SMV) reagieren, um das Leistungssteuersignal (SP) zu erzeugen, und derart ausgebildet, daß das Leistungssteuersignal (SP) den ersten Wert (SPmax), den zweiten Wert (SPf) bzw. den dritten Wert (SPmin) hat, je nachdem, ob das Geschwindigkeits-Soll-Signal (SCV) größer, gleich oder kleiner dem ersten Meßsignal (SMV) ist.

4. Kraftfahrzeug (1) nach Anspruch 1, dadurch gekennzeichnet, daß die Auswählmittel (16,17) umfassen:

- Vergleichermittel (16), die auf das dritte Leistungs-Soll-Signal (SCFb) und auf das vierte Leistungs-Soll-Signal (SCFc) reagieren, um ein Umschaltsignal (SD) zu liefern, und derart ausgebildet, daß das Umschaltsignal (SD) einen ersten Zustand (SD1) bzw. einen zweiten Zustand (SD2) annimmt, je nachdem, ob das dritte Leistungs-Soll-Signal (SCFb) kleiner bzw. größer als das vierte Leistungs-Soll-Signal (SCFc) ist; und
- Umschaltmittel (17) die auf das Umschaltsignal (SD), das dritte Leistungs-Soll-Signal (SCFb) und das vierte Leistungs-Soll-Signal (SXFc) reagieren, um das zweite Leistungs-Soll-Signal (SCFa) zu liefern, und derart ausgebildet, daß das zweite Leistungs-Soll-Signal (SCFa) einen Wert derart hat, daß das zweite Leistungs-Soll-Signal (FCa) gleich dem dritten Leistungs-Soll-Signal (FCb) oder gleich dem vierten Leistungs-Soll-Signal (FCc) ist, je nachdem, ob das Umschaltsignal (SD) in seinem ersten Zustand (SD1) bzw. seinem zweiten Zustand (SD2) ist.

5. Kraftfahrzeug (1) nach Anspruch 1, dadurch gekennzeichnet, daß der bestimmte Bruchteil (f) im wesentlichen gleich 80% ist.

# Fig.1

Fig. 2

Fig.3

EP 0 678 414 B1

# Fig.4

EP 0 678 414 B1

Fig. 5

EP 0 678 414 B1

# Fig. 6

EP 0 678 414 B1